(19) **Europäisches Patentamt / European Patent Office / Office européen des brevets**

(11) **EP 4 778 972 A1**

(12) **EUROPEAN PATENT APPLICATION**
published in accordance with Art. 153(4) EPC

(43) Date of publication:
**22.07.2026 Bulletin 2026/30**

(21) Application number: **24865538.3**

(22) Date of filing: **12.09.2024**

(51) International Patent Classification (IPC):
*C08L 23/12* (2006.01)     *B29C 48/08* (2019.01)
*B29C 55/04* (2006.01)     *B29C 55/12* (2006.01)
*B32B 27/32* (2006.01)     *C08F 10/06* (2006.01)

(52) Cooperative Patent Classification (CPC):
**B29C 48/08; B29C 55/04; B29C 55/12;**
**B32B 27/32; C08F 10/06; C08L 23/12**

(86) International application number:
**PCT/JP2024/032753**

(87) International publication number:
**WO 2025/058038 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023 JP 2023148170**

(71) Applicant: **Prime Polymer Co., Ltd.
Tokyo 104-0028 (JP)**

(72) Inventors:
• **OKAWA, Tomoya
Ichihara-shi, Chiba 299-0108 (JP)**
• **BIRUKAWA, Jun
Ichihara-shi, Chiba 299-0108 (JP)**
• **INUKAI, Akihiro
Tokyo 104-0028 (JP)**

(74) Representative: **J A Kemp LLP
80 Turnmill Street
London EC1M 5QU (GB)**

(54) **PROPYLENE-BASED POLYMER COMPOSITION AND USE THEREOF**

(57) There is provided a stretched film having a good balance between stretchability and heat resistance, having a sufficiently small value of thermal shrinkage rate (at a temperature of 150°C), and further having good printability, as well as a propylene-based polymer composition from which the stretched film can be obtained.

A propylene-based polymer composition satisfying the following requirement 1) to requirement 6), as well as an extruded sheet, a stretched film, and a multilayer film obtained from the composition.

Requirement 1) The mesopentad fraction is 95% or more.

Requirement 2) The comonomer content is 0.2 mol% or less.

Requirement 3) The MFR is 1 to 10 g/10 min.

Requirement 4) The ratio of the mass average molecular weight Mw to the number average molecular weight Mn, Mw/Mn, is 5.5 or less.

Requirement 5) The ratio of the Z+1 average molecular weight $M_{Z+1}$ to the number average molecular weight Mn, $M_{Z+1}$/Mn, is 50 or more.

Requirement 6) The Z+1 average molecular weight $M_{Z+1}$ is 2,500,000 or more.

EP 4 778 972 A1

## Description

Technical Field

The present invention relates to a propylene-based polymer composition and applications obtained therefrom, such as a stretched film.

Specifically, the present invention relates to a propylene-based polymer composition, and a stretched film obtained therefrom having a good balance between stretchability and heat resistance and having good printability.

Background Art

Biaxially stretched polypropylene films (OPP) are widely used as industrial films and food packaging films, and are in high demand. Moreover, in order to further expand the demand for OPP, attempts have been made to improve its performance. Among these, improving the performance to reduce the thermal shrinkage rate (about several tens of percent at a temperature of 150°C) is included. However, in OPP, which contains units derived from propylene as the main constituent, reducing the thermal shrinkage rate (at a temperature of 150°C) is not a simple task and involves certain difficulties.

Patent Literature 1 discloses a stretched polypropylene film. The film has a relatively broad molecular weight distribution, with a ratio of the mass average molecular weight (Mw) to the number average molecular weight (Mn) of 5.5 or more. In this stretched film, the value of thermal shrinkage rate (at a temperature of 150°C) is not sufficiently small.

Patent Literature 2 discloses OPP composed of a resin composition in which random PP is blended. Although the thermal shrinkage rate (at a temperature of 150°C) is reduced to some extent, the amount of sticky components increases, resulting in poor printability.

Patent Literature 3 discloses OPP composed of a propylene-based polymer having a low MFR (0.1 to 15) and a propylene-based polymer having a high MFR (20 to 500). Such OPP does not necessarily have a good balance between stretchability and thermal shrinkage rate, and stable production may be difficult.

Citation List

Patent Literature

Patent Literature 1: JP2014-55276
Patent Literature 2: JP2022-148047
Patent Literature 3: JP2021-161381

Summary of Invention

Technical Problem

An object of the present invention is to provide a stretched film having a good balance between stretchability and heat resistance, having a sufficiently small value of thermal shrinkage rate (at a temperature of 150°C), and further having good printability, as well as a propylene-based polymer composition from which the stretched film can be obtained.

Solution to Problem

The present invention includes any one of the following aspects [1] to [6].

[1] A propylene-based polymer composition satisfying the following requirement 1) to requirement 6).

Requirement 1) The mesopentad fraction is 95% or more.

Requirement 2) The comonomer content is 0.2 mol% or less.

Requirement 3) The MFR is 1 to 10 g/10 min.

Requirement 4) The ratio of the mass average molecular weight Mw to the number average molecular weight Mn, Mw/Mn, is 5.5 or less.

Requirement 5) The ratio of the Z+1 average molecular weight $M_{Z+1}$ to the number average molecular weight Mn, $M_{Z+1}$/Mn, is 50 or more.

Requirement 6) The Z+1 average molecular weight $M_{Z+1}$ is 2,500,000 or more.

[2] The propylene-based polymer composition according to [1], wherein a cold xylene soluble fraction (CXS) is 1.2% by mass or less.

[3] The propylene-based polymer composition according to [1] or [2], comprising the following polymer A, polymer B, and polymer C, which are propylene-based polymers, in the respective proportions described below, wherein a MFR of the polymer A is larger than a MFR of the polymer B, or a Mw/Mn of the polymer A is equal to or smaller than a Mw/Mn of the polymer B.

70 to 98% by mass of polymer A: The MFR is 1 g/10 min or more and less than 9 g/10 min.
1 to 20% by mass of polymer B: The ethylene content is 1 mol% or less and a Mw/Mn is 5.0 to 10.0.
1 to 10% by mass of polymer C: The MFR is 9 to 100 g/10 min and a Mw/Mn is less than 5.0.
(Note that the total of the polymer A, polymer B, and polymer C is 100% by mass.)

[4] An extruded sheet obtained from the propylene-based polymer composition according to any one of [1] to [3].

[5] A uniaxially or biaxially stretched film obtained from the propylene-based polymer composition according to any one of [1] to [3].

[6] A multilayer film comprising at least one layer of the stretched film according to [5].

Advantageous Effects of Invention

According to the present invention, there can be provided a stretched film having a good balance between stretchability and heat resistance, having a small value of thermal shrinkage rate (at a temperature of 150°C), and further having good printability with low stickiness, as well as a propylene-based polymer composition from which the stretched film can be obtained.

Brief Description of Drawing

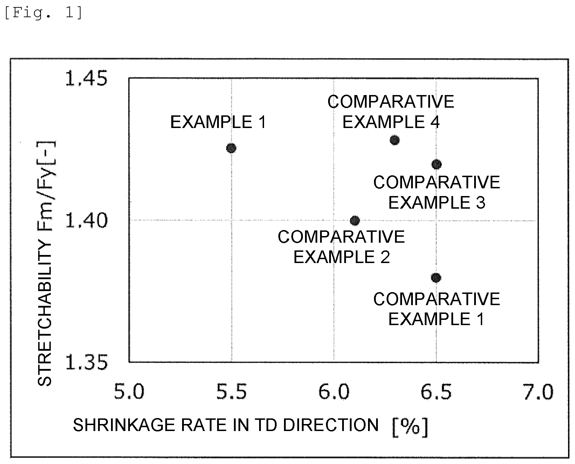

[Figure 1] Figure 1 shows the relationship between stretchability represented by the value of Fm/Fy, and the shrinkage rate (%) in the TD direction for Example 1 and Comparative Examples 1 to 4.

Description of Embodiments

Hereinafter, each configuration of the propylene-based polymer composition of the present invention, as well as the extruded sheet and uniaxially or biaxially stretched film obtained therefrom, will be described.

<Propylene-Based Polymer Composition>

The propylene-based polymer composition according to the present invention is characterized by satisfying the following requirement 1) to requirement 6).
Requirement 1) The mesopentad fraction is 95% or more.
Requirement 2) The comonomer content is 0.2 mol% or less.
Requirement 3) The MFR is 1 to 10 g/10 min.
Requirement 4) The ratio of the mass average molecular weight Mw to the number average molecular weight Mn, Mw/Mn, is 5.5 or less.
Requirement 5) The ratio of the Z+1 average molecular weight $M_{Z+1}$ to the number average molecular weight Mn, $M_{Z+1}$/Mn, is 50 or more.
Requirement 6) The Z+1 average molecular weight $M_{Z+1}$ is 2,500,000 or more.
Hereinafter, each of the requirements will be described.

Regarding Requirement 1)

The mesopentad fraction ([mmmm]%) of the propylene-based polymer composition of the present invention is 95% or more. Preferably, it is 96% or more, and more preferably 97% or more. In addition, it is preferable that the upper limit be 99.5% or less.

The mesopentad fraction ([mmmm]%) is an index indicating the stereoregularity of the propylene-based polymer composition, and within this range, it exhibits high crystallinity and a reduced thermal shrinkage rate (at a temperature of 150°C).

Note that the mesopentad fraction ([mmmm]%) is measured by $^{13}$C-NMR, and the details of the measurement will be described in the Examples.

Regarding Requirement 2)

The comonomer content of the propylene-based polymer in the propylene-based polymer composition of the present invention is 0.2 mol% or less.

As the propylene-based polymer composition of the present invention, various propylene-based resin compositions can be mentioned, for example. Also, as the propylene-based polymer used in the propylene-based polymer composition of the present invention, various propylene-based polymers, including propylene-based resins, can be mentioned. Although it is preferable that the propylene-based polymer be so-called homopolypropylene, which consists only of units derived from propylene, it may also be a copolymer with a comonomer. In such a case, the comonomer content is 0.2 mol% or less, and preferably 0.1 mol% or less. Examples of the comonomer include ethylene and $\alpha$-olefins having 4 to 8 carbon atoms, among which ethylene and 1-butene are preferable. Within such a range, the thermal shrinkage rate (at a temperature of 150°C) is reduced.

Regarding Requirement 3)

The MFR (melt flow rate, 230°C, load 2.16 kgf) of the propylene-based polymer composition is 1 to 10 g/10 min. Furthermore, the lower limit is preferably 2.0 g/10 min, and more preferably 3.0 g/10 min. Also, the upper limit is preferably 9.0 g/10 min, and more preferably 8.0 g/10 min. Within such a range, the thermal shrinkage rate at a high temperature can be reduced.

Regarding Requirement 4)

The ratio of the mass average molecular weight (Mw) to the number average molecular weight (Mn), Mw/Mn, of the propylene-based polymer composition of the present invention is 5.5 or less.

Mw and Mn are determined by gel permeation chromatography (GPC). Details of how to determine them will be described in the Examples.

Also, it is preferable that the upper limit of the value of Mw/Mn be 5.0. In addition, the lower limit is preferably 2.0, and more preferably 2.5. Within such a range, the thermal shrinkage rate at a high temperature can be reduced.

Regarding Requirement 5)

The ratio of the Z+1 average molecular weight $M_{Z+1}$ to the number average molecular weight Mn, $M_{Z+1}$/Mn, of the propylene-based polymer composition of the present invention is 50 or more. The lower limit of this ratio is preferably 60 or more, and more preferably 70 or more. The upper limit is generally about 300 or less, and preferably 200 or less. Note that, in addition to the above, another aspect is that the range of $M_{Z+1}$/Mn is preferably 50 or more and 80 or less, and more preferably 50 or more and 70 or less.

Note that $M_{Z+1}$ is measured by GPC and is defined, based on the molecular weight (Mi) at the elution position i of the GPC curve obtained through a molecular weight calibration curve and its corresponding weight fraction (Xi), according to the following expression.

$$\text{Z+1 Average Molecular Weight } M_{Z+1} = \Sigma(Xi \cdot Mi^4)/\Sigma(Xi \cdot Mi^3)$$

(Here, each $\Sigma$ means the sum of the values at all elution positions.

That is, the sum of the weight fractions Xi is $\Sigma Xi = 1$).

Note that details of the measurement will be described in the Examples.

The $M_{Z+1}$/Mw indicates a value emphasizing the contribution of the high molecular weight components in the molecular weight distribution, and represents a value of the molecular weight distribution with further emphasized contribution from the molecular weight, compared to the ratio of the Z average molecular weight $M_Z$ to Mn, $M_Z$/Mn, defined by the following expression:

$$Z\ Average\ Molecular\ Weight\ Mz\ =\ \Sigma(Xi \cdot Mi^3)/\Sigma(Xi \cdot Mi^2).$$

(Here, each $\Sigma$ also means the sum of the values at all elution positions.

That is, the sum of the weight fractions Xi is $\Sigma Xi = 1$).

Regarding Requirement 6)

The Z+1 average molecular weight $M_{Z+1}$ of the propylene-based polymer composition is 2,500,000 or more. The lower limit is preferably 2,600,000 or more, and more preferably 2,700,000 or more. The upper limit is normally 4,000,000 or less, and preferably 3,800,000 or less. Within this range, the high molecular weight components are sufficient, and the effects of the present invention can be readily achieved. In addition, it is possible to stably carry out stretching and molding of stretched films, for example.

The propylene-based polymer composition of the present invention preferably has a cold xylene soluble fraction (CXS) of 1.2% by mass or less, more preferably 1.0% by mass or less, and still more preferably 0.8% by mass or less. Also, the cold xylene soluble fraction (CXS) is generally 0.1% by mass or more. The cold xylene soluble fraction (CXS) can be determined by the following method.

Cold Xylene Soluble Fraction (CXS) (unit: % by mass)

2 g of a sample composed of the propylene-based polymer composition is dissolved in 300 mL of p-xylene at 13.0°C (containing 0.5 mg/mL of BHT), and the resulting solution is allowed to stand at 25°C.

After 48 hours, the precipitate and the filtrate are separated by filtration, and p-xylene is evaporated from the filtrate. The filtrate is then dried under reduced pressure at 100°C for 12 hours to recover the components dissolved in p-xylene. The proportion (% by mass) of the mass (g) of the recovered components to 2 g of the sample is the CXS.

In order to achieve a CXS of the propylene-based polymer composition within the above range, the propylene-based polymer may be produced using a polymerization catalyst capable of providing propylene-based polymers with high stereoregularity.

If the CXS is within the above range, the crystallinity of the propylene-based polymer is sufficiently high, and the thermal shrinkage rate at a high temperature (at a temperature of 150°C) of the stretched film obtained therefrom can be further reduced.

Furthermore, stickiness is low, and printability is good.

The melting point of the propylene-based polymer composition of the present invention is normally 145 to 170°C. In particular, the lower limit is preferably 150°C or higher, and more preferably 155°C or higher. In addition, the upper limit is preferably 170°C or lower, and more preferably 168°C or lower.

The propylene-based polymer composition of the present invention satisfying the above requirement 1) to requirement 6) can be produced by various methods. For example, the composition can be obtained by producing propylene-based polymers with different molecular weights through multi-stage polymerization. Alternatively, the composition can be obtained by producing propylene-based polymers with different molecular weights by polymerization and then blending them with a kneading machine. In addition, the composition can be obtained by polymerizing propylene-based polymers using multiple polymerization catalysts of different performance.

As the polymerization catalyst, Ziegler-Natta catalysts, metallocene catalysts, and other catalysts can be used, and regulation of the molecular weight of the propylene-based polymer can also be carried out by the amount of hydrogen present in the polymerization system. For compounding of two or more types of propylene-based polymers, there is a method in which a mixing apparatus such as a Banbury mixer, a single screw extruder, or a twin screw extruder is used to mix or melt-knead each propylene polymer either simultaneously or sequentially.

As the propylene-based polymer used in the present invention, as long as the above requirement 1) to requirement 6) are satisfied, a homopolymer of propylene or a copolymer of propylene with a comonomer such as ethylene or an $\alpha$-olefin having 4 to 20 carbon atoms is used. Examples of the $\alpha$-olefin having 4 to 20 carbon atoms include 1-butene, 1-pentene, 1-hexene, 4-methyl-1-pentene, 1-octene, 1-decene, 1-dodecene, 1-tetradecene, 1-hexadecene, 1-octadecene, and 1-eicosene. Among these comonomers, ethylene or an $\alpha$-olefin having 4 to 10 carbon atoms is preferable, with ethylene being more preferable.

The propylene-based polymer used in the present invention may include those in which propylene and, if applicable, a comonomer such as ethylene, which constitute the polymer, are derived from biomass. For example, propylene constituting the polymer may be biomass-derived propylene alone, or it may include both biomass-derived propylene and fossil fuel-derived propylene. The biomass-derived propylene refers to propylene produced by using as the raw material any renewable natural resources or residues thereof, such as plant- or animal-derived materials including fungi, yeast, algae, and bacteria, in which the $^{14}C$ isotope is contained as carbon in a proportion of about $10^{-12}$, and the

biomass carbon concentration (pMC) measured in accordance with ASTM D 6866 is about 100 (pMC). The biomass-derived propylene can be obtained by a conventionally known method. The inclusion of biomass-derived propylene in the propylene-based polymer used in the present invention is preferable from the viewpoint of reducing environmental impact (mainly, greenhouse gas reduction). As long as the polymer production conditions such as polymerization catalyst, polymerization process, and polymerization temperature are equivalent, a propylene-based polymer containing biomass-derived propylene as the raw material propylene has a molecular structure equivalent to that of a propylene homopolymer composed of fossil fuel-derived propylene, except for containing the $^{14}C$ isotope in a proportion of about $10^{-12}$ to $10^{-14}$. Accordingly, their performance is also considered essentially the same.

The propylene-based polymer used in the present invention may also include those in which propylene and, if applicable, a comonomer such as ethylene, which constitute the polymer, are chemical recycling-derived ones. For example, propylene constituting the polymer may be chemical recycling-derived propylene alone, or it may include chemical recycling-derived propylene, and fossil fuel-derived propylene and/or biomass-derived propylene. The chemical recycling-derived propylene can be obtained by a conventionally known method. The inclusion of chemical recycling-derived propylene in the propylene-based polymer according to the present invention is preferable from the viewpoint of reducing environmental impact (mainly, waste reduction). Since the chemical recycling-derived monomer is a monomer obtained by restoring a polymer such as waste plastic up to the monomer unit such as propylene by depolymerization or thermal decomposition, or a monomer produced using such a monomer as the raw material, as long as the polymer production conditions such as polymerization catalyst, polymerization process, and polymerization temperature are equivalent, a propylene-based polymer containing a chemical recycling-derived monomer as the raw material monomer has a molecular structure equivalent to that of a propylene-based polymer composed of a fossil fuel-derived monomer.

Accordingly, their performance is also considered essentially the same.

The propylene-based polymer composition of the present invention contains the following polymer A, polymer B, and polymer C, which are propylene-based polymers, in the respective proportions described below, and it is preferably produced by blending them in the respective proportions described below, wherein the MFR of the polymer A is larger than the MFR of the polymer B, or the Mw/Mn of the polymer A is equal to or smaller than the Mw/Mn of the polymer B.

70 to 98% by mass of polymer A: The MFR is 1 g/10 min or more and less than 9 g/10 min.

1 to 20% by mass of polymer B: The ethylene content is 1 mol% or less and the Mw/Mn is 5.0 to 10.0.

1 to 10% by mass of polymer C: The MFR is 9 to 100 g/10 min and the Mw/Mn is less than 5.0.

(Note that the total of the polymer A, polymer B, and polymer C is 100% by mass.)

The polymer A, the polymer B, and the polymer C will be described below.

<Polymer A>

The polymer A, which is a propylene-based polymer, has a MFR (melt flow rate, 230°C, load 2.16 kgf) of 1 g/10 min or more and less than 9 g/10 min.

The physical properties of the polymer A are preferably within the ranges described below.

That is, the mesopentad fraction ([mmmm]%) of the polymer A is preferably 95% or more, more preferably 96% or more, and still more preferably 97% or more. In addition, it is preferable that the upper limit be 99.5% or less.

Although it is preferable that the polymer A be so-called homopolypropylene, which consists only of units derived from propylene, it may also be a copolymer with a comonomer. In such a case, the comonomer content is preferably 0.2 mol% or less, and more preferably 0.1 mol% or less. Examples of the comonomer include ethylene and $\alpha$-olefins having 4 to 8 carbon atoms, among which ethylene and 1-butene are preferable.

The MFR (melt flow rate, 230°C, load 2.16 kgf) of the polymer A is 1 g/10 min or more and less than 9 g/10 min, and furthermore, the lower limit is preferably 2.0 g/10 min, and more preferably 2.5 g/10 min. In addition, the upper limit is preferably 8.0 g/10 min.

The Mw/Mn of the polymer A is preferably 5.5 or less, more preferably 5.0 or less. In addition, the lower limit is preferably 2.0 or more, and more preferably 2.5 or more.

The $M_{Z+1}$/Mn of the polymer A is preferably 20 or more, more preferably 25 or more, and particularly preferably 28 or more. In addition, the upper limit thereof is generally about 300, and preferably 200 or less.

The $M_{Z+1}$ of the polymer A is preferably 1,500,000 or more, and more preferably 1,800,000 or more. In addition, the upper limit is normally 4,000,000 or less, and preferably 3,800,000 or less.

Furthermore, the polymer A preferably has a cold xylene soluble fraction (CXS) of 1.2% by mass or less.

<Polymer B>

The polymer B, which is a propylene-based polymer, has a comonomer content of 1 mol% or less and a Mw/Mn of 5.0 to 10.0.

The physical properties of the polymer B are preferably within the ranges described below.

That is, the mesopentad fraction ([mmmm]%) of the polymer B is preferably 95% or more, more preferably 96% or more, and still more preferably 97% or more. It is also preferable that the upper limit be 99.5% or less.

The polymer B may be so-called homopolypropylene, which consists only of units derived from propylene. Alternatively, it may be a copolymer with a comonomer, and in such a case, the comonomer content is 1 mol% or less, and more preferably 0.8 mol% or less. Examples of the comonomer include ethylene and $\alpha$-olefins having 4 to 8 carbon atoms, among which ethylene is preferable.

Although the MFR (melt flow rate, 230°C, load 2.16 kgf) of the polymer B is not particularly limited, in particular, it is preferable that the MFR be 0.1 g/10 min or more, and it is preferable that the upper limit be 4.0 g/10 min. The upper limit of the MFR is more preferably less than 1, still more preferably 0.9 or less, and particularly preferably 0.5 or less.

The Mw/Mn of the polymer B is 5.0 to 10.0, and preferably 6 to 9.

The $M_{Z+1}$/Mn of the polymer B is preferably 50 or more, more preferably 60 or more, and particularly preferably 70 or more. In addition, the upper limit thereof is generally 300 or less, and preferably 200 or less.

The $M_{Z+1}$ of the polymer B is preferably 3,000,000 or more, more preferably 4,500,000 or more, and particularly preferably 6,000,000 or more. In addition, the upper limit is normally 10,000,000 or less, and preferably 8,000,000 or less.

Furthermore, the polymer B preferably has a cold xylene soluble fraction (CXS) of 1.2% by mass or less.

<Polymer C>

The polymer C, which is a propylene-based polymer, has a MFR of 9 to 100 g/10 min and a Mw/Mn of less than 5.0.

The physical properties of the polymer C are preferably within the ranges described below.

That is, the mesopentad fraction ([mmmm]%) of the polymer C is preferably 95% or more, more preferably 96% or more, and still more preferably 97% or more. It is also preferable that the upper limit be 99.5% or less.

The polymer C may be so-called homopolypropylene, which consists only of units derived from propylene. Alternatively, it may be a copolymer with a comonomer, and in such a case, the comonomer content is 1 mol% or less, and more preferably 0.8 mol% or less. Examples of the comonomer include ethylene and $\alpha$-olefins having 4 to 8 carbon atoms, among which ethylene is preferable.

Although the MFR (melt flow rate, 230°C, load 2.16 kgf) of the polymer C is 9 to 100 g/10 min, in particular, it is preferably 20 to 100 g/10 min, and more preferably 40 to 100 g/10 min.

The Mw/Mn of the polymer C is less than 5.0, and preferably 4.5 or less. In addition, the lower limit is preferably 2.0 or more, and more preferably 2.5 or more.

The $M_{Z+1}$/Mn of the polymer C is preferably 50 or less, more preferably 40 or less, and particularly preferably 30 or less. In addition, the lower limit thereof is generally about 8, and preferably 10 or more.

The $M_{Z+1}$ of the polymer C is preferably 2,000,000 or less, more preferably 1,000,000 or less, and particularly preferably 800,000 or less. In addition, the lower limit is normally 200,000 or more, and preferably 400,000 or more.

Furthermore, the polymer C preferably has a cold xylene soluble fraction (CXS) of 1.2% by mass or less.

The propylene-based polymer composition of the present invention is preferably prepared from 70 to 98% by mass of the polymer A, 1 to 20% by mass of the polymer B, and 1 to 10% by mass of the polymer C, and is particularly preferably prepared from 72 to 90% by mass of the polymer A, 3 to 15% by mass of the polymer B, and 2 to 8% by mass of the polymer C (note that the total of the polymer A, polymer B, and polymer C is 100% by mass).

To the propylene-based polymer composition of the present invention, if necessary, addition of the various additives is also carried out to the extent that the purpose of the present invention is not impaired, such as a heat stabilizer, a weathering stabilizer, an antioxidant, an ultraviolet absorber, a lubricant, a slip agent, a nucleating agent, an antiblocking agent, an antistatic agent, an antifogging agent, a pigment, a dye, and an inorganic or organic filler.

Examples of the antioxidant include a phenol-based antioxidant, an organic phosphite-based antioxidant, a thioether-based antioxidant, and a hindered amine-based antioxidant. Examples of the antiblocking agent include aluminum oxide, finely powdered silica, polymethyl methacrylate powder, and silicone resin.

Examples of the slip agent include bisamides such as ethylenebisstearamide, and higher fatty acid amides such as oleic acid amide and erucic acid amide.

Examples of the lubricant include higher fatty acid metal salts such as calcium stearate, zinc stearate, and montanic acid metal salts, and polyolefin waxes such as polyethylene wax and polypropylene wax.

Examples of the nucleating agent include rosin-based nucleating agents such as dibenzylidene sorbitol and partial metal salts of rosin acid, aluminum-based nucleating agents, and talc.

<Extruded Sheet, and Uniaxially or Biaxially Stretched Film>

The propylene-based polymer composition of the present invention can be molded into, for example, a sheet, an unstretched film, a uniaxially or a biaxially stretched film by various known molding methods and used. Examples of the molding methods include extrusion molding methods such as sheet molding, T-die film molding, stretched film molding, calendering, and inflation molding.

The extruded sheet normally has a thickness of 250 to 3000 $\mu$m. The unstretched film generally has a thickness of 3 $\mu$m or more, preferably 5 to 250 $\mu$m, and more preferably 10 to 200 $\mu$m.

The uniaxially or biaxially stretched film can be formed by stretching an extruded sheet or an unstretched film in one direction or two directions. For biaxial stretching, methods such as sequential biaxial stretching, simultaneous biaxial stretching, or multi-stage stretching are employed as appropriate.

The stretching ratio is normally about 1.5 to 10 times for the uniaxially stretched film, and for the sequentially biaxially stretched film, about 1.5 to 7 times in the longitudinal direction and about 2 to 10 times in the transverse direction.

The stretching temperature is normally 100 to 140°C for uniaxial stretching and simultaneous biaxial stretching, and for sequential biaxial stretching, 100 to 140°C for stretching in the longitudinal direction and 140 to 180°C for stretching in the transverse direction. The uniaxially or biaxially stretched film has a thickness of 5 $\mu$m or more, and preferably 5 to 100 $\mu$m.

The uniaxially or biaxially stretched film of the present invention can be obtained from the characteristic propylene-based polymer composition, and is not only excellent in mechanical strength, rigidity characteristics, and optical characteristics, but also has a low thermal shrinkage rate (at a temperature of 150°C). It is expected that its use will expand to a wide range of applications, such as industrial packaging materials, food packaging, and textile packaging, thereby further increasing demand.

<Multilayer Film>

The multilayer film of the present invention is obtained by laminating at least one other layer on one surface of the uniaxially or biaxially stretched film described above.

Examples of the other layer include films composed of polyester represented by polyethylene terephthalate or polyethylene naphthalate, a polycarbonate film, polyamide films composed of, for example, nylon 6, nylon 66, an ethylene-vinyl alcohol copolymer film, a polyvinyl alcohol film, a polyvinyl chloride film, a polyvinylidene chloride film, and other films, or sheets composed of these films, aluminum foil, or paper.

As the method for laminating, for example, the uniaxially or biaxially stretched film of the present invention on the other layer described above, lamination methods generally carried out can be employed. These multilayer films can be formed by multilayer co-extrusion, or an adhesive layer can be provided between, for example, the uniaxially or biaxially stretched film and the other layer described above. For example, the following methods are employed: a method in which a urethane-based or isocyanate-based anchor coat agent is applied to the other layer described above and the uniaxially or biaxially stretched film of the present invention is dry laminated thereon, or a method in which the other layer described above is extrusion laminated or extrusion coated on the uniaxially or biaxially stretched film.

Examples of the multilayer film of the present invention include polyester layer / biaxially stretched film, polyamide layer / biaxially stretched film, polyester layer / polyamide layer / biaxially stretched film, polyester layer / aluminum foil / biaxially stretched film, polyester layer / polyamide layer / aluminum foil / biaxially stretched film, and polyamide layer / polyvinylidene chloride layer / polyester layer / biaxially stretched film.

The multilayer film of the present invention is excellent in seal strength (peel strength) and blocking resistance when a portion of the film is used as a heat-sealed portion in uniaxial or biaxial stretching. In addition, the multilayer film also possesses functions provided by the other layer, such as mechanical strength and gas barrier properties, and its use in a wider range of applications as various packaging materials is expected.

Examples

Next, the present invention will be described in more detail with reference to Examples and Comparative Examples; however, the present invention is in no way limited by these examples.

<Mesopentad Fraction (unit: %)>

The mesopentad fraction (mmmm fraction) is a value determined according to the assignments described in A. Zambelli et al., Macromolecules, 8, 687 (1975), and was measured by $^{13}$C-NMR under the conditions described below. Note that the mesopentad fraction is a value expressed by the following expression.

Mesopentad Fraction = ((Peak Area at 21.7 ppm)/(Peak Area at 19 to 23 ppm)) $\times$ 100

Measurement conditions
Apparatus: JNM-Lambada 400 (trade name, manufactured by JEOL Ltd.)
Resolution: 400 MHz
Measurement temperature: 125°C
Solvent: 1,2,4-trichlorobenzene/deuterated benzene = 7/4 (mass ratio)
Pulse width: 7.8 $\mu$s
Pulse interval: 5 s
Number of scans: 2000
Shift reference: TMS = 0 ppm
Mode: Single pulse broadband decoupling.

<Comonomer Ethylene Content in Propylene-Based Polymer (unit: mol%)>

When the propylene-based polymer contains ethylene as a comonomer, the content thereof is measured using Fourier transform infrared spectroscopy (FTIR) calibrated by $^{13}$C-NMR.

The ethylene content was measured based on the -$CH_2$-absorption peak area at 775 to 670 cm$^{-1}$ (for 0.2 to 3% ethylene) or 758 to 702 cm$^{-1}$ (for 3 to 33% ethylene) of the film used as the sample (thickness about 300 $\mu$m, multiple films may be stacked if necessary).

<MFR (unit: g/10 min)>

The MFR (melt flow rate) of the propylene-based polymer was measured in accordance with JIS K 7210 at 230°C under a load of 2.16 kgf.

<Mw/Mn>, <$M_{Z+1}$>, and <$M_{Z+1}$/Mn>

The Mn, Mw, $M_Z$, and $M_{Z+1}$ of the propylene-based polymer were calculated by performing measurement under the following conditions and analysis of the obtained chromatogram using a known method, and these values were then used to obtain the Mw/Mn, $M_{Z+1}$, and $M_{Z+1}$/Mn.

- Apparatus: HLC-8321GPC/HT (detector: RI)
- Columns: TSKgel guardcolumn H$_{HR}$(30)HT (7.5 mmI.D. × 7.5 cm) × 1 and TSKgel GMH$_{HR}$-H(20)HT (7.8 mmI.D. × 30 cm) × 3, connected in series (manufactured by Tosoh Corporation)
- Eluent: 1,2,4-trichlorobenzene (for GPC, manufactured by FUJIFILM Wako Pure Chemical Corporation) + BHT (0.05%)
- Flow rate: 1.0 mL/min.
- Detection conditions: polarity = (-)
- Injection volume: 0.3 mL
- Column temperature: 140°C
- System temperature: 40°C
- Sample concentration: 1 mg/mL
- Pretreatment: The sample was weighed, TCB (without addition of BHT) was added, and the mixture was shaken and dissolved at 140°C for 1 hour. Thereafter, the solution was hot-filtered through a sintered filter with a pore size of 0.5 $\mu$m (visually confirmed to be free from undissolved matter).
- Calibration curve: A fifth-order approximation curve using standard polystyrene manufactured by Tosoh Corporation. Note that the molecular weight was converted to a molecular weight in terms of PP using the Q-factor.

<Cold Xylene Soluble Fraction (CXS) (unit: % by mass)>

2 g of a sample composed of the propylene-based polymer is dissolved in 300 ml of p-xylene at 13.0°C (containing 0.5 mg/mL of BHT), and the resulting solution is allowed to stand at 25°C. After 48 hours, the precipitate and the filtrate are separated by filtration, and p-xylene is evaporated from the filtrate. Then, the residue is dried under reduced pressure at 100°C for 12 hours to recover the components dissolved in p-xylene. The proportion (% by mass) of the mass (g) of the recovered components to 2 g of the sample is the CXS.

Physical Properties of Biaxially Stretched Film

<Tensile Modulus (unit: MPa)>

The tensile modulus (MPa) of the biaxially stretched film was measured under the following conditions in accordance with JIS K 7127.

(Measurement Conditions) The biaxially stretched film sample was cut into strips with a width of 10 mm and a length of 150 mm, and subjected to a tensile test at a crosshead speed of 500 mm/min. The machine direction was defined as MD, and the direction perpendicular thereto was defined as TD.

<Thermal Shrinkage Rate (at temperature of 150°C) (unit: %)>

The biaxially stretched film sample was placed in a hot air oven and heated in an atmosphere of 150°C for 15 minutes. The thermal shrinkage rate was defined as the proportion of the length of shrinkage to the dimension before heating. Also, the longitudinal stretching direction was defined as MD, and the transverse stretching direction was defined as TD.

<Stretchability> (Fm/Fy)

The stretchability was evaluated by the following method with reference to Satoshi Tamura, Itaru Kuramoto, and Toshitaka Kanai, Proceedings of the 17th Autumn Meeting of the Japan Society of Polymer Processing (Nov. 6-7, 2009, Nagasaki).

An unstretched original sheet having a width of about 150 mm was produced using a 30 mmφ sheet molding machine (manufactured by GM Engineering Co., Ltd.), cut into 90 mm long × 90 mm wide pieces, and then subjected to biaxial stretching using a table tenter biaxial stretching machine (manufactured by Bruckner). The preheating temperature was set to 153°C, the preheating time was set to 90 seconds, and the film was stretched 5 times in the longitudinal direction (MD) at a stretching temperature of 153°C. Subsequently, the film was stretched 8 times in the transverse direction (TD) at the same stretching temperature. From the stretching force-stretching ratio curve measured by a load cell during the stretching, the yield force Fy (N) and the maximum force Fm (N) were determined, and the ratio between these stretching forces Fm/Fy was calculated as an index indicating stretchability.

This Fm/Fy value is an index indicating the stretchability of the film during stretching, and the larger this value, the better the stretchability.

Example 1

In Example 1, a propylene-based polymer composition containing the polymer A, polymer B, and polymer C shown in Table 2 in the proportions shown in Table 2 was used. Their physical property values are as shown in Table 1 and Table 2.

The polymers used were as follows.

Polymer A

A commercially available propylene-based polymer (manufactured by Prime Polymer Co., Ltd., trade name: F133A)

Polymer B

(1) Polymer B-1

The one obtained in Reference Example (Polymer B-1) described below was used.

(2) Polymer B-2

A commercially available propylene-based polymer (manufactured by Prime Polymer Co., Ltd., trade name: E-100GV)

(3) Polymer B-3

A commercially available propylene-based polymer (manufactured by Prime Polymer Co., Ltd., trade name: B221WC)

(4) Polymer B-4

The one obtained in Reference Example (Polymer B-4) described below was used.

Polymer C

(1) Polymer C-1

A commercially available propylene-based polymer (manufactured by Prime Polymer Co., Ltd., trade name: S119)

(2) Polymer C-2

A commercially available propylene-based polymer (manufactured by Prime Polymer Co., Ltd., trade name: H-50000)

Reference Example (Polymer B-1)

The polymer B-1 was obtained as follows.

Using a supported type titanium-based catalyst (highly stereoregular catalyst) in which the electron donor was dicyclopentyldimethoxysilane, random copolymerization was performed by two-stage polymerization so that the content of ethylene constituent units was 0.6 mol%, adjusting the amounts of a high molecular weight component having an intrinsic viscosity $[\eta]$ of 4.3 dl/g and a low molecular weight component having an intrinsic viscosity $[\eta]$ of 2.1 dl/g to 52% by weight and 48% by weight, respectively, and a propylene-ethylene copolymer with a broadened molecular weight distribution was obtained as the propylene-based polymer.

With respect to 100% by weight of the copolymer, 0.1 parts by weight of a phenol-based antioxidant, tetrakis [methylene-3(3,5-di-t-butyl-4-hydroxyphenyl)propionate]methane (manufactured by BASF SE), 0.1 parts by weight of a phosphorus-based antioxidant, 2,2-methylenebis(4,6-di-t-butylphenyl) octyl phosphite (manufactured by ADEKA Corporation), and 0.1 parts by weight of a neutralizing agent, calcium stearate (manufactured by NOF Corporation), were compounded, and the mixture was melt kneaded at a resin temperature of 230°C using a single screw extruder and pelletized.

Reference Example (Polymer B-4)

The polymer B-4 was obtained as follows.

A solid catalyst component was obtained by allowing a magnesium compound (carrier for the solid catalyst), silicon tetrachloride, and titanium tetrachloride to react with each other. Propylene was prepolymerized on this solid catalyst component to obtain a prepolymerized catalyst.

Next, 336 liters of propylene was charged into a 600-liter autoclave, and the temperature was increased to 60°C. Thereafter, 8.7 mL of triethylaluminum, 11.4 mL of dicyclopentyldimethoxysilane, and 2.9 g of the prepolymerized catalyst described above were charged to start polymerization. Seventy-five minutes after the start of polymerization, the temperature was decreased to 50°C over 10 minutes (completion of the first stage polymerization).

The intrinsic viscosity $[\eta]$ of a propylene-based polymer (a1) polymerized under the same conditions as the first stage was 11 dl/g.

After decreasing the temperature, hydrogen was continuously supplied so that the pressure remained constant at 3.3 MPaG, and polymerization was carried out for 151 minutes. Then, the vent valve was opened, and unreacted propylene was purged through an integrating flow meter (completion of the second stage polymerization).

In this manner, 51.8 kg of a propylene-based polymer (A) in the form of powder was obtained.

To this propylene-based polymer composition, the following were added: as antioxidants, 2000 ppm of Irganox 1010 (manufactured by BASF SE), 2000 ppm of Irgafos 168 (manufactured by BASF SE), and 1000 ppm of Sandostab P-EPQ (manufactured by Clariant Japan K.K.); and as a neutralizing agent, 1000 ppm of calcium stearate. The mixture was melt kneaded in a twin screw extruder and pelletized to obtain a propylene-based polymer (polymer B-4).

Using the propylene-based polymer composition of Example 1, an unstretched original sheet was produced with a sheet molding machine and cut into 90 mm long × 90 mm wide pieces. The pieces were then subjected to biaxial stretching using a table tenter biaxial stretching machine. The preheating temperature was set to 153°C, the preheating time was set to 90 seconds, and the film was stretched 5 times in the longitudinal direction (MD) at a stretching temperature of 153°C. Subsequently, the film was stretched 8 times in the transverse direction (TD) at the same temperature (with a stretching rate of 286%/sec in both directions). The film was then relaxed at a heat setting temperature of 150°C (5% in MD and 5% in TD) to obtain a sequentially biaxially stretched film with a thickness of 20 microns ($\mu$m).

Comparative Examples 1 to 4

Using the propylene-based polymer compositions shown in Table 1 and Table 3 (Comparative Example 1) to Table 6 (Comparative Example 4), biaxially stretched films were formed in the same manner as in Example 1. The physical properties of the obtained biaxially stretched films are shown in Table 1.

The relationship between stretchability represented by the value of Fm/Fy, and the shrinkage rate (%) in the TD direction for Example 1 and Comparative Examples 1 to 4 is shown in Figure 1.

Figure 1 shows that Example 1 maintains good stretchability (with an Fm/Fy value of 1.43, which is appropriately large) while exhibiting a low shrinkage rate (%) in the TD direction of the biaxially stretched film, at 5.5%.

In contrast, Comparative Examples 1 to 4 all have shrinkage rates (%) that are clearly higher than that of Example 1.

[Table 1]

Table 1

| | Physical property items | | Unit | Example 1 | Comparative Example 1 | Comparative Example 2 | Comparative Example 3 | Comparative Example 4 |
|---|---|---|---|---|---|---|---|---|
| Propylene-based polymer composition | 1) Mesopentad | ≥ 95 | % | 97.2 | 97.3 | 97.3 | 96.8 | 97.3 |
| | 2) Comonomer amount | ≤ 0.2 | mol % | 0.08 | 0 | 0 | 0.5 | 0 |
| | 3) MFR | 1 ≤ ≤ 10 | g/10 min | 3.5 | 3.0 | 3.8 | 3.9 | 3.9 |
| | 4) Mw/Mn | ≤ 5.5 | - | 4.8 | 4.8 | 5 | 5 | 7.9 |
| | 5) Mz+1/Mn | 50 ≤ | - | 53.3 | 28.6 | 36.3 | 35.5 | 116.3 |
| | 6) Mz+1 | 2,500,000 ≤ | - | 3,700,000 | 1,900,000 | 2,250,000 | 2,200,000 | 5,000,000 |
| | CXS | ≤ 1.2 | wt% | 1.2 | 1.0 | 1.3 | 1.5 | 1.3 |

| | | | Unit | Example 1 | Comparative Example 1 | Comparative Example 2 | Comparative Example 3 | Comparative Example 4 |
|---|---|---|---|---|---|---|---|---|
| Physical properties of biaxially stretched film | Tensile modulus | MD direction | Mpa | 4100 | 4000 | 3900 | 3700 | 4100 |
| | | TD direction | Mpa | 7400 | 7300 | 7300 | 7000 | 7400 |
| | Thermal shrinkage rate (150°C) | MD direction | % | 1.0 | 1.1 | 1.0 | 1.0 | 1.0 |
| | | TD direction | % | 5.5 | 6.5 | 6.1 | 6.5 | 6.3 |
| | Stretching stress | Maximum stress Fm | N | 94.8 | 101.0 | 98.0 | 82.4 | 85.7 |
| | | Yield stress Fy | N | 66.5 | 73.2 | 70.0 | 58.0 | 60.0 |
| | Stretchability | Fm/Fy | - | 1.43 | 1.38 | 1.40 | 1.42 | 1.43 |

[Table 2]

| Table 2 Example 1 | | | Polymer A (main resin) | | Polymer B-1 (high molecular weight component) | | Polymer C-1 (low molecular weight component) | |
|---|---|---|---|---|---|---|---|---|
| Propylene-based polymer composition | | | Compounding proportion | 78 wt% | Compounding proportion | 14 wt% | Compounding proportion | 8 wt% |
| Physical property items | | Unit | | | | | | |
| 1) Mesopentad | ≥ 95 | % | 97.2 | 97.3 | | 96.7 | | 97.3 |
| 2) Comonomer amount | ≤ 0.2 | mol % | 0.08 | 0 | | 0.6 | | 0 |
| 3) MFR | 1 ≤ ≤ 10 | g/10 min | 3.6 | 3.0 | | 0.3 | | 60 |
| 4) Mw/Mn | ≤ 5.5 | - | 4.8 | 4.8 | | 7.3 | | 3.4 |
| 5) Mz+1/Mn | 50 ≤ | - | 53.0 | 29.0 | | 82.8 | | 12.3 |
| 6) Mz+1 | 2,500,000 ≤ | - | 3,700,000 | 1,900,000 | | 7,280,000 | | 630,000 |
| CXS | ≤ 1.2 | wt% | 1.2 | 1.0 | | Not measured | | Not measured |

[Table 3]

Table 3 (Comparative Example 1)

| Table 3 Comparative Example 1 | | | Polymer A (main resin) | |
|---|---|---|---|---|
| Propylene-based polymer composition | | | Compounding proportion | 100 wt% |
| Physical property items | | Unit | | |
| 1) Mesopentad | ≥ 95 | % | 97.3 | 97.3 |
| 2) Comonomer amount | ≤ 0.2 | mol % | 0 | 0 |
| 3) MFR | 1 ≤ ≤ 10 | g/10 min | 3.0 | 3.0 |
| 4) Mw/Mn | ≤ 5.5 | - | 4.8 | 4.8 |
| 5) Mz+1/Mn | 50 ≤ | - | 29.0 | 29.0 |
| 6) Mz+1 | 2,500,000 ≤ | - | 1,900,000 | 1,900,000 |
| CXS | ≤ 1.2 | wt% | 1.0 | 1.0 |

[Table 4]

Table 4 (Comparative Example 2)

| Table 4 Comparative Example 2 | | | Polymer A (main resin) | | Polymer B-2 (high molecular weight component) | | Polymer C-1 (low molecular weight component) | |
|---|---|---|---|---|---|---|---|---|
| Propylene-based polymer composition | | | Compounding proportion | 78 wt% | Compounding proportion | 14 wt% | Compounding proportion | 8 wt% |
| Physical property items | | Unit | | | | | | |
| 1) Mesopentad | ≥ 95 | % | 97.3 | 97.3 | | 97.3 | | 97.3 |
| 2) Comonomer amount | ≤ 0.2 | mol % | 0 | 0 | | 0 | | 0 |
| 3) MFR | 1 ≤ ≤ 10 | g/10 min | 3.8 | 3.0 | | 0.5 | | 60 |
| 4) Mw/Mn | ≤ 5.5 | - | 5.0 | 4.8 | | 4.8 | | 3.4 |
| 5) Mz+1/Mn | 50 ≤ | - | 36.0 | 29.0 | | 48.8 | | 12.3 |
| 6) Mz+1 | 2,500,000 ≤ | - | 2,250,000 | 1,900,000 | | 5,370,000 | | 630,000 |
| CXS | ≤ 1.2 | wt% | 1.3 | 1.0 | | Not measured | | Not measured |

[Table 5]

| Propylene-based polymer composition | Table 5 Comparative Example 3 | | | | Polymer A (main resin) | Polymer B-3 (high molecular weight component) | Polymer C-1 (low molecular weight component) |
|---|---|---|---|---|---|---|---|
| | Propylene-based polymer composition | | | | Compounding proportion / 78 wt% | Compounding proportion / 14 wt% | Compounding proportion / 8 wt% |
| | Physical property items | | Unit | | | | |
| | 1) Mesopentad | ≥ 95 | % | 96.8 | 97.3 | 93.6 | 97.3 |
| | 2) Comonomer amount | ≤ 0.2 | mol % | 0.5 | 0 | 3.7 | 0 |
| | 3) MFR | 1 ≤ ≤ 10 | g/10 min | 3.9 | 3.0 | 0.5 | 60 |
| | 4) Mw/Mn | ≤ 5.5 | - | 5 | 4.8 | 4.8 | 3.4 |
| | 5) Mz+1/Mn | 50 ≤ | - | 35.5 | 29.0 | 50.0 | 12.3 |
| | 6) Mz+1 | 2,500,000 ≤ | - | 2,200,000 | 1,900,000 | 5,500,000 | 630,000 |
| | CXS | ≤ 1.2 | wt% | 1.5 | 1.0 | Not measured | Not measured |

[Table 6]

| Propylene-based polymer composition | Table 6 Comparative Example 4 | | | | Polymer A (main resin) | Polymer B-4 (high molecular weight component) | Polymer C-2 (low molecular weight component) |
|---|---|---|---|---|---|---|---|
| | Propylene-based polymer composition | | | | Compounding proportion / 78 wt% | Compounding proportion / 14 wt% | Compounding proportion / 8 wt% |
| | Physical property items | | Unit | | | | |
| | 1) Mesopentad | ≥ 95 | % | 97.3 | 97.3 | 97.3 | 97.3 |
| | 2) Comonomer amount | ≤ 0.2 | mol % | 0 | 0 | 0 | 0 |
| | 3) MFR | 1 ≤ ≤ 10 | g/10 min | 3.9 | 3.0 | 1.2 | 500 |
| | 4) Mw/Mn | ≤ 5.5 | - | 7.9 | 4.8 | 177.9 | 4.8 |
| | 5) Mz+1/Mn | 50 ≤ | - | 116.3 | 29.0 | 2142.3 | 7.3 |
| | 6) Mz+1 | 2,500,000 ≤ | - | 5,000,000 | 1,900,000 | 14,030,000 | 273,000 |
| | CXS | ≤ 1.2 | wt% | 1.3 | 1.0 | Not measured | Not measured |

**Claims**

1. A propylene-based polymer composition satisfying the following requirement 1) to requirement 6):

   requirement 1) a mesopentad fraction is 95% or more;
   requirement 2) a comonomer content is 0.2 mol% or less;
   requirement 3) a MFR is 1 to 10 g/10 min;
   requirement 4) a ratio of a mass average molecular weight Mw to a number average molecular weight Mn, Mw/Mn, is 5.5 or less;
   requirement 5) a ratio of a Z+1 average molecular weight $M_{Z+1}$ to a number average molecular weight Mn, $M_{Z+1}$/Mn, is 50 or more; and
   requirement 6) a Z+1 average molecular weight $M_{Z+1}$ is 2,500,000 or more.

2. The propylene-based polymer composition according to claim 1, wherein a cold xylene soluble fraction (CXS) is 1.2% by mass or less.

3. The propylene-based polymer composition according to claim 1 or 2, comprising the following polymer A, polymer B, and polymer C, which are propylene-based polymers, in the respective proportions described below, wherein a MFR of the polymer A is larger than a MFR of the polymer B, or a Mw/Mn of the polymer A is equal to or smaller than a Mw/Mn of the polymer B:

70 to 98% by mass of polymer A: a MFR is 1 g/10 min or more and less than 9 g/10 min;
1 to 20% by mass of polymer B: an ethylene content is 1 mol% or less and a Mw/Mn is 5.0 to 10.0; and
1 to 10% by mass of polymer C: a MFR is 9 to 100 g/10 min and a Mw/Mn is less than 5.0,
provided that a total of the polymer A, polymer B, and polymer C is 100% by mass.

4. An extruded sheet obtained from the propylene-based polymer composition according to claim 1 or 2.

5. A uniaxially or biaxially stretched film obtained from the propylene-based polymer composition according to claim 1 or 2.

6. A multilayer film comprising at least one layer of the stretched film according to claim 5.

[Fig. 1]

## INTERNATIONAL SEARCH REPORT

| International application No. |
|---|
| **PCT/JP2024/032753** |

### A. CLASSIFICATION OF SUBJECT MATTER

*C08L 23/12*(2006.01)i; *B29C 48/08*(2019.01)i; *B29C 55/04*(2006.01)i; *B29C 55/12*(2006.01)i; *B32B 27/32*(2006.01)i; *C08F 10/06*(2006.01)i

FI: C08L23/12; C08F10/06; B29C48/08; B29C55/04; B29C55/12; B32B27/32 Z

According to International Patent Classification (IPC) or to both national classification and IPC

### B. FIELDS SEARCHED

Minimum documentation searched (classification system followed by classification symbols)

C08L23/12; B29C48/08; B29C55/04; B29C55/12; B32B27/32; C08F10/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/104089 A1 (TOYOBO CO., LTD.) 03 July 2014 (2014-07-03)<br>claims, paragraphs [0034]-[0038], [0061], [0069]-[0070], examples | 1-6 |
| X | JP 2014-51658 A (TOYOBO CO., LTD.) 20 March 2014 (2014-03-20)<br>claims, paragraphs [0035]-[0041], [0058], [0064]-[0065], examples | 1-6 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **28 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/032753**

| Patent document cited in search report | | | Publication date (day/month/year) | Patent family member(s) | | | Publication date (day/month/year) |
|---|---|---|---|---|---|---|---|
| WO | 2014/104089 | A1 | 03 July 2014 | TW | 201431916 | A | |
| JP | 2014-51658 | A | 20 March 2014 | WO | 2014/024970 | A1 | |
| | | | | TW | 201412778 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014055276 A
- JP 2022148047 A

- JP 2021161381 A